# EUROPÄISCHE PATENTSCHRIFT

(11) **EP 1 307 790 B1**
(45) Veröffentlichungstag und Bekanntmachung des Hinweises auf die Patenterteilung: **26.11.2003**
(21) Anmeldenummer: 01962596.1
(22) Anmeldetag: 09.08.2001
(51) Int. Cl.: G04G 5/00, H04Q 7/22, H04Q 7/32, H04M 1/725

(54) **VERFAHREN ZUR SYNCHRONISATION DER INTERNEN UHR EINES MOBILFUNKENDGERÄTS MIT DER LOKALEN ZEIT**
METHOD FOR SYNCHRONISING THE INTERNAL CLOCK OF A MOBILE RADIO TERMINAL WITH THE LOCAL TIME
PROCEDE DE SYNCHRONISATION DE L'HORLOGE INTERNE D'UN TERMINAL MOBILE ET DE L'HEURE LOCALE

(30) Priorität: 11.08.2000 DE 10040035
(43) Veröffentlichungstag der Anmeldung: 07.05.2003
(73) Patentinhaber: T-Mobile Deutschland GmbH, 53227 Bonn (DE)
(72) Erfinder: ZSCHINTZSCH, Hans, 53639 Königswinter (DE)
(74) Vertreter: Riebling, Peter, Dr.-Ing.
(86) Internationale Anmeldenummer: DE0102954
(87) Internationale Veröffentlichungsnummer: WO02014961

(56) Entgegenhaltungen:
- DE-A- 10 065 484
- DE-A- 19 860 936
- FR-A- 2 784 760

## Beschreibung

Die Erfindung betrifft ein Verfahren zur Synchronisation der internen Uhr eines Mobilfunkendgeräts mit der lokalen Zeit.

Bekanntlich hat ein Mobilfunkendgerät, insbesondere ein GSM-Endgerät im allgemeinen keine Möglichkeiten, die korrekte lokale (Uhr-)Zeit festzustellen. Selbst wenn im Endgerät ein Uhrenbaustein eingebaut ist, so muss diesem im allgemeinen vom Benutzer die richtige Zeit mitgeteilt werden.

Gemäß GSM-Mobilfunkstandard ist es Vorgesehen, die von einem Mobilfunkendgerät kommenden, in einem Short Message Service Centre (SMSC) empfangenen Kurznachrichten mit einem Zeitstempel zu versehen, der den Zeitpunkt des Empfangs der Kurznachricht im SMSC angibt. Dies ist allgemein in ETSI Spezifikation ETS 300 901 vom April 1997, Seiten 15 und 50 beschrieben.

Ferner ist aus der DE 198 60 936 A1 ein Verfahren zur Synchronisation der internen Uhr eines Mobilfunkendgeräts mit der lokalen Zeit bekannt, bei welchem das Mobilfunkendgerät eine Kurznachricht an sich selbst versendet, aus den Sende- und Empfangszeiten der Kurznachrichtensignale und einem in der empfangenen Kurznachricht enthaltenen Zeltstempel die lokale Uhrzeit ableitet und die interne Uhr mit dieser lokalen Uhrzeit synchronisiert. Bei diesem Verfahren wird unmittelbar die Zeitinformation des Zeitstempels zur Synchronisation der internen Uhrzeit verwendet, was aufgrund von Laufzeiten und Verzögerungen oft keine ausreichend genaue Zeitbestimmung zulässt. Zur Erhöhung der Genauigkeit wird daher vorgeschlagen eine Zeitkorrekturgröße zum Zeitstempel zu addieren, welche die Signallaufzeiten zwischen Basisstation und Mobilfunkendgerät berücksichtigt.

Die FR 2 784 760 A1 offenbart ein Verfahren zum Stellen der Uhr eines Mobiltelefons. Aus den Signalen des vom Mobiltelefon augenblicklich verwendeten Mobilfunknetzes wird insbesondere der Ländercode des Mobilfunknetzes extrahiert. Aus dem Ländercode kann die aktuelle Zeitzone bestimmt werden, in der sich das Mobiltelefon befindet. Die Uhr des Mobiltelefons kann dann entsprechend der aktuellen Zeitzone korrigiert werden.

Die Aufgabe der Erfindung besteht darin, ein einfaches aber dennoch relativ genaues Verfahren zur Synchronisation der internen Uhr eines Mobilfunkendgeräts mit der lokalen Zeit vorzuschlagen.

Die Lösung der Aufgabe erfolgt erfindungsgemäß durch die Merkmale des Patentanspruchs 1 oder Patentanspruchs 2.

Eine vorteilhafte Ausführungsform und Weiterbildung des erfindungsgemäßen Verfahrens ist in dem abhängigen Patentanspruch 3 angegeben.

Das beschriebene Verfahren bietet dem Mobilfunkteilnehmer die Möglichkeit, sich auf einfache Weise die aktuelle, lokale Uhrzeit vom Mobilfunkendgerät anzeigen zu lassen. Die Uhrzeit ist bis auf einige Sekunden genau bestimmbar, was in der Praxis vollkommen ausreicht.

Das Verfahren kann so ausgebaut werden, dass sich ein Mobilfunkteilnehmer auch auf Reisen, d.h. bei Roaming, praktisch durch "Knopfdruck" mit der "richtigen" lokalen Zeit versorgen kann.

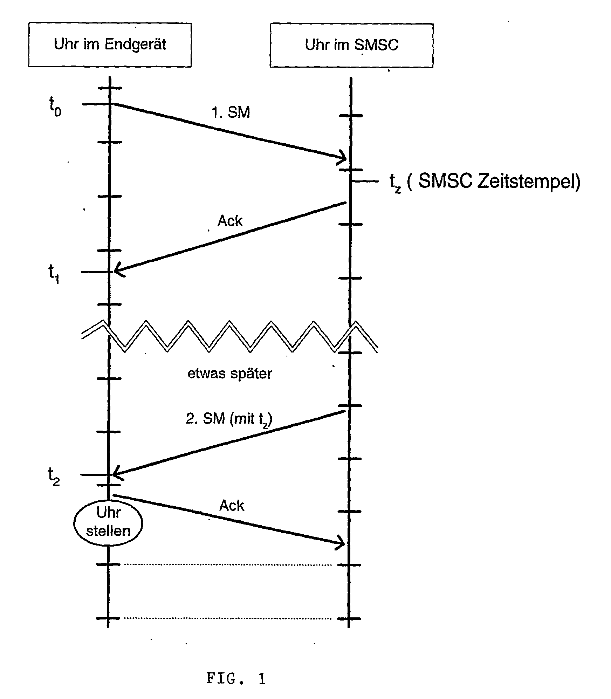

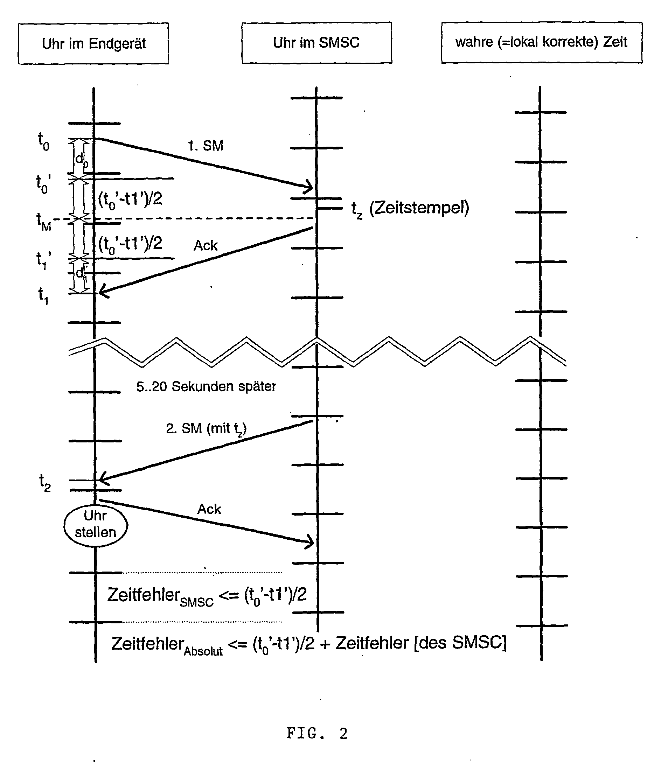

Anhand der Figuren 1 und 2 sei ein Beispiel für das erfindungsgemäße Verfahren erläutert. Aus den Zeichnungen und deren Beschreibung ergeben sich weiteren Merkmale und Vorteile der Erfindung. Es zeigen:
- Figur 1:: Beispielhaftes Ablaufdiagram des Verfahren zum Stellen der Uhr im Endgerät mittels einer Kurznachricht (Short Message) an sich selbst;
- Figur 2:: Ablaufdiagramm zur Verbesserung der Genauigkeit des Verfahrens.

Wie aus Figur 1 hervorgeht, nutzt das erfindungsgemäße Verfahren im wesentlichen aus, dass in digitalen Mobilfunknetzen, insbesondere GSM-Mobilfunknetzen, jede Kurznachricht über ein sogenanntes Short Message Service Centre (SMSC) geführt wird, und dort jede Nachricht mit einem Zeitstempel t_{Z} versehen wird, der wiederum dem Empfänger der Nachricht mitgeteilt wird.
Schickt also ein Mobilfunkendgerät eine Kurznachricht zum Zeitpunkt t₀ an sich selbst, so erfährt es zum Zeitpunkt t₂ (nach wenigen Sekunden) beim Erhalt der an sich selbst versandten Kurznachricht den Zeitpunkt t_{Z} des Eintreffens seiner eigenen Nachricht im SMSC. Merkt das Endgerät sich den Absendezeitpunkt t₀ durch registrieren der Stellung der internen Uhr, sowie den Quittierungszeitpunkt t₁, wenige Sekunden nach dem Absenden der eigenen Nachricht, so ist dadurch ein Zeitfenster zwischen t₀ und t₁ gegeben, in dem der Zeitstempel t_{Z} des SMSC garantiert liegen muss. Durch maximale Eingrenzung des Zeitfensters kann man mit guter Genauigkeit den Zeitpunkt t_{Z} ableiten.

Eine Detailbetrachtung der Mindestübertragungszeiten im GSM-Netz, insbesondere der Laufzeiten der Signale auf der Luftschnittstelle, erlaubt eine weitere Schrumpfung des Zeitfensters zwischen t₀ und t₁, sodass eine Genauigkeit der Prognose von t_{Z} von etwa einer Sekunde erreichbar scheint. Diese Genauigkeit ist für praktische Zwecke oft ausreichend. Dies wird nachfolgend anhand von Figur 2 erläutert.

Zum Zeitpunkt t₀ sendet das Endgerät eine Kurznachricht an sich selbst ab, die vom SMSC empfangen wird.

Das Endgerät berechnet den Zeitpunkt t₀' = t₀ + d₀, wobei d₀ die geschätzte oder bekannte Mindestübertragungszeit für die Nachricht vom Endgerät zum SMSC ist. Vor Ablauf von d₀ Zeiteinheiten kann die Nachricht nicht am SMSC angekommen sein.

Das Endgerät wartet auf die Quittung (Ack) über dem Empfang der Nachricht im SMSC. Die Quittung trifft zum Zeitpunkt t₁ ein.

Das Endgerät berechnet den Zeitpunkt t₁' = t₁ - d₁, wobei d₁ die geschätzte oder bekannte Mindestübertragungszeit für die Quittung vom SMSC zum Endgerät ist.
Das SMSC muss die Quittung vor diesem Zeitpunkt t₁' auf den Weg gebracht haben.

Aus den berechneten Zeitpunkten t₀' und t₁' wird nun der Mittelwert t_{M} = (t₁' + t₀')/2 gebildet. Dieser Mittelwert t_{M} entspricht ziemlich genau dem Wert (Zeitpunkt) des vom SMSC vergebenen Zeitstempels t_{Z}.

Das Endgerät wartet nun auf das Eintreffen der an sich selbst gerichteten Nachricht, die zum Zeitpunkt t₂ beim Endgerät eintrifft.
Das Endgerät entnimmt der Nachricht den Zeitstempel t_{Z}.

Das Endgerät vergleicht den Zeitstempel t_{Z} mit dem berechneten Wert t_{M} und korrigiert gegebenenfalls seine interne Uhr um die Differenz von t_{D} = t_{Z} - t_{M} Zeiteinheiten.

Offensichtlich ist bei dieser Wahl der Korrektur der maximale Zeitfehler relativ zum SMSC Δt = (t₁ - t₀) /2 bzw. am Kleinsten.

Die absolute Genauigkeit hängt ab von der maximalen Abweichung der SMSC-Uhr von der "wahren Zeit", d.h. der absolute Zeitfehler ist um die Ungenauigkeit der Zeitbasis im SMSC größer.

Das Verfahren kann auch im Roamingfalle, d.h. wenn ein Mobilfunkteilnehmer sich außerhalb seines Heimatnetzes aufhält, angewandt werden, wenn die SMS-Nachricht an einen am SMSC angeschlossenen Zeitserver übermittelt wird, und dem Zeitserver in der Nachricht der Network Code desjenigen Netzes, in das das Endgerät augenblicklich eingebucht ist mitgeteilt wird. Der Zeitserver wird dem Endgerät in seiner Antwort die anzuwendende Zeitzone bzw. die anzuwendende Korrektur mitteilen. Hierbei kann nach wie vor das Heimat-SMSC verwendet werden. Dies kann etwa durch eine SIM-Toolkit Anwendung relativ leicht im Endgerät realisiert werden.

## Patentansprüche

1. Verfahren zur Synchronisation der internen Uhr eines Mobilfunkendgeräts mit der lokalen Zeit, wobei das Mobilfunkendgerät eine Kurznachricht (SM) an sich selbst versendet, aus den Sende- und Emptangszeiten der Kurznachrichtensignale und einem in der empfangenen Kurznachricht (SM) enthaltenen Zeitstempel t_{Z} die lokale Uhrzeit ableitet und die interne Uhr mit dieser lokalen Uhrzeit synchronisiert
**dadurch gekennzeichnet**
**dass** die vom Mobilfunkendgerät zu einem Zeitpunkt t₀ abgesendete Kurznachricht zunächst im Short Message Service Center, im weiteren als SMSC bezeichnet, empfangen und mit dem Zeitstempel t_{Z} versehen wird, wobei der Empfang an das Mobilfunkendgerät quittiert wird (ack),
**dass** das Mobilfunkendgerät den Absendezeitpunkt t₀ sowie den Zeitpunkt der Quittierung t₁ der Kurznachricht (SM) durch das SMSC registriert und daraus den Zeitpunkt t_{M} = (t₁ + t₀)/2 ableitet, und
**dass** die den Zeitstempel t_{Z} enthaltende Kurznachricht vom SMSC zurück an das Mobilfunkendgerät übertragen wird, welches aus der empfangenen Kurznachricht den Zeitstempel t_{Z} extrahiert, mit t_{M} vergleicht und die interne Uhr um die Differenz t_{D} = t_{Z} - t_{M} korrigiert.

2. Verfahren nach Anspruch 1, bei dem eine Verbesserung der Genauigkeit von t_{M} durch Berücksichtigung der Übertragungszeit d₀ der Kurznachricht (SM) vom Mobilfunkendgerät zum SMSC und der Übertragungszeit d₁ der Quittierung (ack) vom SMSC an das Mobilfunkendgerät erreicht wird durch Ersatz von tₘ = (t₁+t₀)/2 durch tₘ=(t₁'+t₀')/2, wobei t₁' = t₁ - d₁ und t₀' = t₀ + d₀.

3. Verfahren nach einem oder mehreren der vorhergehenden Ansprüche, **dadurch gekennzeichnet, dass** dem SMSC in der Kurznachricht (SM) der Network Code desjenigen Netzes, in das das Endgerät augenblicklich eingebucht ist mitgeteilt wird, welcher Network Code an einen am SMSC angeschlossenen Zeitserver übermittelt wird, wobei der Zeitserver dem Endgerät in seiner Antwort die anzuwendende Zeitzone bzw. die anzuwendende Korrektur mitteilt.

## Claims

1. Method for synchronising the internal clock of a mobile communications terminal device with local time, wherein the mobile communications terminal device sends a short message (SM) to itself, derives the local time from the transmission and receive times of the short message signals and a time stamp t_{Z} contained in the received short message (SM) and synchronises the internal clock with this local time, **characterised in that** the short message sent off by the mobile communications terminal device at a time t₀ is first of all received in the Short Message Service Center, referred to hereafter as the SMSC, and provided with the time stamp t_{Z}, wherein reception at the mobile communications terminal device is acknowledged (ack), that the mobile communications terminal device registers the dispatch time t₀ and the time of acknowledgement t₁ of the short message (SM) by the SMSC and from this derives the time t_{M} = (t₁ + t₀)/2 and that the short message containing the time stamp t_{Z} is transmitted by the SMSC back to the mobile communications terminal device which from the short message received extracts the time stamp t_{Z}, compares it with t_{M} and corrects the internal clock by the difference to = t_{Z} - t_{M}.

2. Method according to Claim 1, in which an improvement in the accuracy of t_{M} by taking into account the transmission time d₀ of the short message (SM) from the mobile communications terminal device to the SMSC and the transmission time d₁ of the acknowledgement (ack) from the SMSC to the mobile communications terminal device is achieved by substituting t_{M} = (t₁ + t₀)/2 by t_{M} = (t₁' + t₀')/2, wherein t₁' = t₁ - d₁ and t₀' = t₀ + d₀.

3. Method according to one or more of the preceding claims, **characterised in that** in the short message (SM) the network code of the network in which the terminal device is currently registered is communicated to the SMSC which network code is transmitted to a time server connected to the SMSC, wherein the time server communicates in its reply to the terminal device the time zone to be employed or the correction to be applied.

## Revendications

1. Procédé pour synchroniser l'horloge interne d'un terminal radiotéléphonique mobile avec l'heure locale, selon lequel ledit terminal s'envoie à lui-même un message court (SM), déduit l'heure locale à partir des heures d'émission et de réception des signaux de message court et d'un repère de temps t_{Z} contenu dans le message court (SM) reçu, et synchronise l'horloge interne avec cette heure locale,
**caractérisé en ce que** le message court envoyé par le terminal radiotéléphonique mobile à un moment t₀ est tout d'abord reçu dans le centre de service de messages courts, appelé dans ce qui suit SMSC, et est doté du repère de temps t_{Z}, un accusé de réception étant envoyé (ack) au terminal,
**en ce que** ledit terminal enregistre le moment d'émission t₀ ainsi que le moment de l'accusé de réception t₁ du message court (MS) par le SMSC, et en déduit le moment t_{M}=(t₁+t₀)/2, et
**en ce que** le message court qui contient le repère de temps t_{Z} est renvoyé par le SMSC au terminal, qui extrait le repère de temps t_{Z} du message court reçu, le compare avec t_{M} et corrige l'horloge interne suivant la différence t_{D}=t_{Z}-t_{M}.

2. Procédé selon la revendication 1, selon lequel une amélioration de la précision de t_{M} est obtenue grâce à la prise en compte de l'heure de transmission d₀ du message court (SM) par le terminal au SMSC, et de l'heure de transmission d₁ de l'accusé de réception (ack) envoyé par le SMSC au terminal, grâce au remplacement de t_{M}=(t₁+t₀)/2 par t_{M}=(t₁'+t₀')/2, étant précisé que t₁'=t₁-d₁ et t₀'=t₀+d₀.

3. Procédé selon l'une au moins des revendications précédentes, **caractérisé en ce que** dans le message court (SM), le code de réseau du réseau dans lequel le terminal est momentanément enregistré est communiqué au SMSC, ce code de réseau étant transmis à un serveur de temps relié au SMSC, lequel serveur de temps communique au terminal, dans sa réponse, la plage horaire à appliquer ou la correction à appliquer.
